Europäisches Patentamt

(19) European Patent Office

Office européen des brevets

(11) Publication number: **0 088 460**
**B1**

(12) **EUROPEAN PATENT SPECIFICATION**

(45) Date of publication of patent specification: **30.12.86**

(21) Application number: **83200231.5**

(22) Date of filing: **06.08.80**

(60) Publication number of the earlier application in accordance with Art. 76 EPC: **0 023 843**

(51) Int. Cl.⁴: **B 64 B 1/00**

(54) **Aircraft having buoyant gas balloon.**

(30) Priority: **06.08.79 US 64286**

(43) Date of publication of application:
**14.09.83 Bulletin 83/37**

(45) Publication of the grant of the patent:
**30.12.86 Bulletin 86/52**

(84) Designated Contracting States:
**CH DE FR GB IT LI SE**

(56) References cited:
**FR-A- 482 466**
**GB-A-2 030 098**
**US-A-3 017 138**

(73) Proprietor: **Ferguson, Frederick**
**217 Compton Avenue**
**Ottawa Ontario (CA)**

(72) Inventor: **Ferguson, Frederick**
**217 Compton Avenue**
**Ottawa Ontario (CA)**

(74) Representative: **Fisher, Bernard et al**
**Raworth, Moss & Cook 36 Sydenham Road**
**Croydon Surrey CR0 2EF (GB)**

Courier Press, Leamington Spa, England.

## Description

The present invention relates to an aircraft in which the major part of the lift is provided by a body of buoyant gas, i.e., a gas lighter than air, for example helium. The aircraft may be a passive load supporting device intended merely to provide lift with propulsion being supplied by a helicopter or by other means. Such devices are known and are exemplified by US—A—3017138.

In European Patent Application No. 80302686.3 (EP—A—23843), from which the present Application is divided, the aircraft takes the form of a self-propelled and steerable airship (a dirigible).

Conventionally, airships have been made with the buoyant gas held in gas bags contained within an elongated enclosure, in order to minimize air resistance. An elongated shape of this kind however has some disadvantages especially in large sizes.

Firstly, to achieve good aerodynamic shape in a large airship, a rigid structure is required which contains numerous gas bags and which defines the exterior shape of the airship, and such a structure is quite expensive. Small airships, the so-called blimps, are made without any rigid structure but these cannot be made in an ideal streamlined shape.

A major drawback of conventional airships is the difficulty of mooring and loading a large airship in other than very calm weather, due to the tendency of the craft to act as a weathervane and to swing about with changes in wind direction.

Airships have hitherto used bags of buoyant gas substantially at atmospheric pressure. These bags expand and contract depending on the surrounding atmospheric pressure and temperature, so that the volume of the bags depends both on the weather conditions and on the height of the airship, giving wide fluctuations in the available lift. This means that airship operations are conventionally very much weather dependent, and for example an airship may have to wait until the air temperature has warmed sufficiently before it can take off.

The aircraft of my invention avoids these difficulties by the use of a single, spherical, balloon which contains the buoyant gas (normally helium) at a pressure sufficiently high that the shape and size of the balloon is substantially unaffected by normal changes in atmospheric pressure and temperature, even when the balloon has little or no internal supporting structure.

Balloons containing buoyant gas at pressures substantially higher than atmospheric, so-called "super-pressure" balloons, have previously been used as free flight balloons for atmospheric monitoring. The use of a manned balloon of this type as part of a project termed ATMOSAT is described in the APCA Journal, Vol. 27, No. 6 of June 1977. The balloon used was ten meters in diameter and made of a sandwich of materials including an inner layer of Kevlar cloth, a layer of bilaminated Mylar, and an outer sheet of aluminized Mylar. Kevlar is a Trade Mark of DuPont for a polyester fibre; Mylar is a Trade Mark for a polyester made in thin sheets and having great tensile strength.

The superpressure balloons so far made have been free flight balloons having a gondola suspended below the balloon by a series of cables which are attached to tabs spaced around the lower part of the balloon. The balloon fabric is strong enough to hold these suspension means without the usual load bearing net being placed over the top of the balloon. It is reported that the performance of these ATMOSAT balloons displayed extreme stability, the internal pressurization being sufficient to allow them to overcome any atmospheric perturbations which might otherwise have caused the balloon to change altitudes and disturb the measurements.

The aircraft of my invention utilizes a spherical, superpressure balloon of similar nature and fabric to that of the ATMOSAT balloon, but the manner by which the load is suspended from the balloon is quite different from the more conventional arrangement used in the ATMOSAT, and allows a number of important novel features to be incorporated in my aircraft.

The term "superpressure balloon" as used herein means a balloon of non-elastic material, having essentially fixed dimensions and shape which, once the balloon is properly inflated, do not change by reason of the type of changes in external pressure and temperature which occur with normal atmospheric changes and changes in altitude. A superpressure balloon is normally designed to accommodate safely an internal pressure of say 35 millibars above atmospheric pressure, so that the balloon can be launched with a pressure slightly above atmospheric pressure and fly at at least several thousand feet without losing the buoyant gas (helium). Depending on size, however, a superpressure balloon may accommodate pressures of over 100 millibars above the surrounding pressure, and special materials may be used to increase this pressure to say 300 millibars or more. The fabric used for these superpressure balloons may have strength between 31 Kg/cm and 124 Kg/cm, depending on internal pressure to be used and depending on diameter. The aircraft of this invention will preferably use a balloon strong enough that it can be filled with helium at ground level and can hold all the helium while operating at up to 4,530 metres which will be the maximum altitude for unloaded flight. Although provision is made for dumping helium in the event of excess internal/external pressure differential, it is not envisaged that dumping will normally occur. However, there will be some normal reduction of helium pressure with increasing altitude due to release of air from a ballonet which is contained within the balloon, as described below.

In accordance with one aspect of the invention there is provided an aircraft comprising a spherical balloon for containing a buoyant gas and load supporting means connected to said balloon in such manner as to allow the balloon to rotate about a normally horizontal axis passing through the centre of the balloon, characterized in that said balloon is a superpressure balloon having substantially fixed dimensions and shape when inflated, in that said load supporting means is a rigid yoke and includes arms which extend upwardly from central load engaging means and having upper ends rotatably connected to the balloon, and further comprising:—

a rigid towing yoke having two arms and having a central attachment means for a tow bar or cable, and

means pivotably connecting outer ends of the towing yoke arms to the upper ends of the load supporting yoke in such manner that the towing yoke can be pivoted relative to the load supporting yoke about a horizontal axis passing through the centre of the balloon from a towing position in which the towing yoke extends upwardly from its connection with the load supporting yoke, to a tethered position wherein the towing yoke extends downwardly from said connection with the load supporting yoke and allows said attachment means to be used to tether the balloon to the ground, said towing yoke being dimensioned relative to the balloon so as to be pivotable through at least 180° relative to the load supporting yoke. The upper ends of the load supporting yoke arms are preferably connected by an axle passing through the centre of the balloon; this is not only convenient where rotation is to be allowed, but additionally adds structural strength to the aircraft, and holds the correct spacing of the load supporting arms.

The aforesaid normally horizontal axis is transverse to the normal direction of travel of the aircraft.

The load supporting means is in the form of a rigid yoke having the two arms extending upwardly from a central load engaging means. Such a yoke provides a rigid connection between the load engaging means or gondola and the balloon. With this arrangement, turning or propelling forces applied to the load supporting yoke are suitably transmitted to the balloon without any flexible cables intervening and conversely when the aircraft is moored the balloon is held rigidly to the load engaging means.

Preferably, the arms of the load supporting yoke are curved to conform with the balloon curvature and to support the load engaging means in such position that the gap separating the outer surface of the balloon from the adjacent surface of the structure is less than one third the balloon radius.

The arms of the load supporting means may constitute two halves of a semi-circular or similarly curved load supporting yoke.

It has previously been proposed in accordance with Canadian Patent No. 153,756 which issued to Hutson to provide an airship with a rotating structure or "wheel" containing independently inflatable compartments or gas bags. The purpose of rotation was primarily to prevent overheating of the gas contained in the gas bags, although it is stated "This large rotating wheel also forces the air downwardly during the forward movement of the machine and occasions a lifting impulse". Actually, rotation as described would not produce a lifting impulse but rather the opposite. Also, it is believed that a large rotating wheel containing separate gas bags as suggested by this patent is not a practical proposition since the gas bags, being constantly subjected to lifting forces, will tend to move or expand towards the top of the wheel as this is rotated upsetting the balance of the wheel, causing oscillations, and making this difficult to rotate. Further, it is to be noted that in this prior patent the means for rotation are not contained in the yoke arms but include a cable which encircles the periphery of the wheel.

It has also been proposed according to French Patent No. 482,466 to Vinet to provide an airship which accords with the pre-characterising part of claim 1 and has a spherical balloon rotatable about a transverse axle. The prior art balloon is rotated by vanes on its surface. However, as with Hutson, the rotational direction suggested would not produce a Magnus lift but rather the reverse. Also, the gondola of the Vinet airship is suspended by cables and there is no rigid load supporting yoke providing a rigid connection between the gondola and the balloon.

As indicated above, the aircraft of this invention is a passive load supporting device, most suitably designed for towing by a helicopter. By means of such device, the load which can be moved by a helicopter can be increased five times or more.

The buoyancy of the balloon of my aircraft (and hence the lifting forces) can best be regulated by an air containing ballonet within the balloon, connected to a compressor capable of forcing air into the ballonet against the pressure of buoyant gas to expand the ballonet and thereby to reduce the volume of buoyant gas. The ballonet may provide the sole means for regulating the altitude of the aircraft.

Further preferred features of the invention will be described with reference to the accompanying drawings showing preferred embodiments of the invention and in which:—

Figure 1 shows a side elevation of a dirigible airship in accordance with my invention as claimed in European Patent Application No. 80302686.3, from which this Application is divided;

Figure 2 shows a front view of the airship;

Figure 3 shows a diagrammatic detail view generally on lines 3—3 of Figure 1;

Figure 4 shows a side elevation of a passive load support aircraft in accordance with the present invention;

Figure 5 shows the aircraft of Figure 4 when moored to the ground;

Figure 6 is a diagrammatic front elevation of the aircraft of Figure 4;

Figure 7 is a diagrammatic view showing an operation of the aircraft shown in Figure 4;

Figure 8 is a front view of a modified passive load support aircraft in accordance with my invention; and

Figures 9a to 9c show diagrammatically different forms of load supporting means.

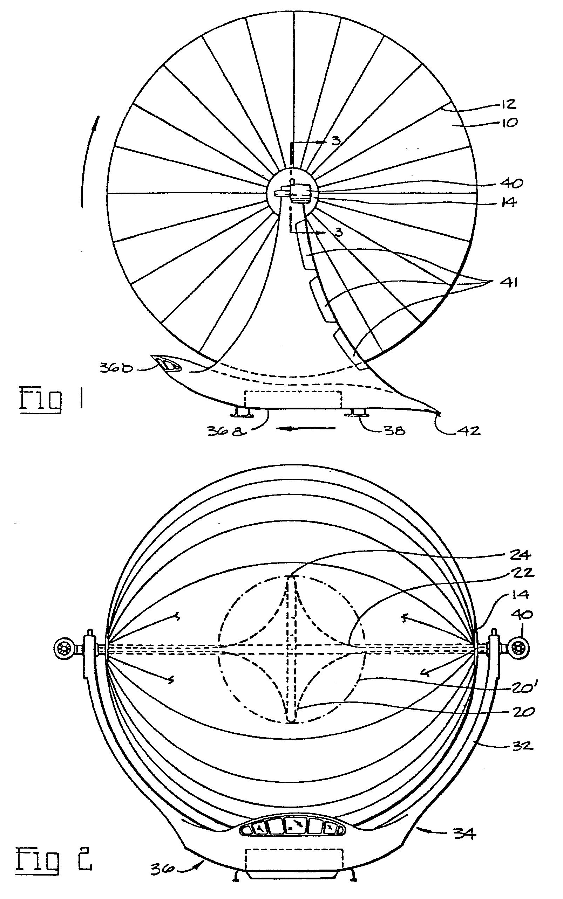

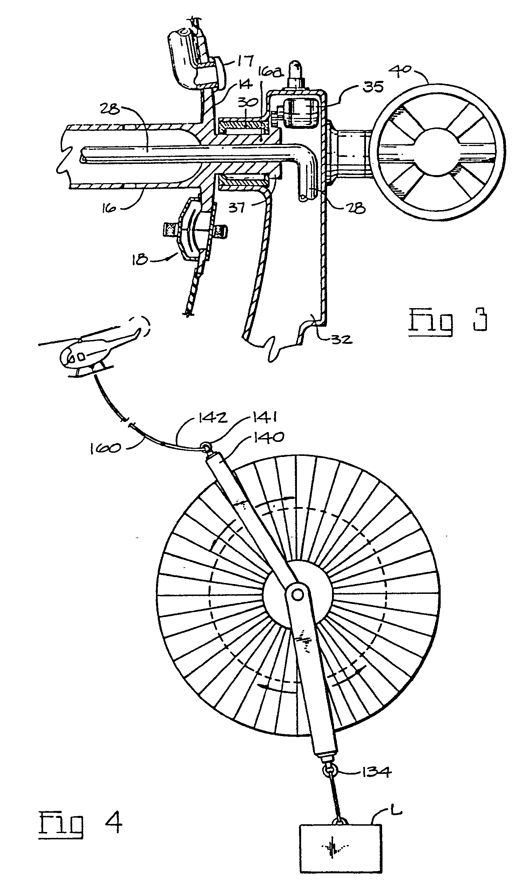

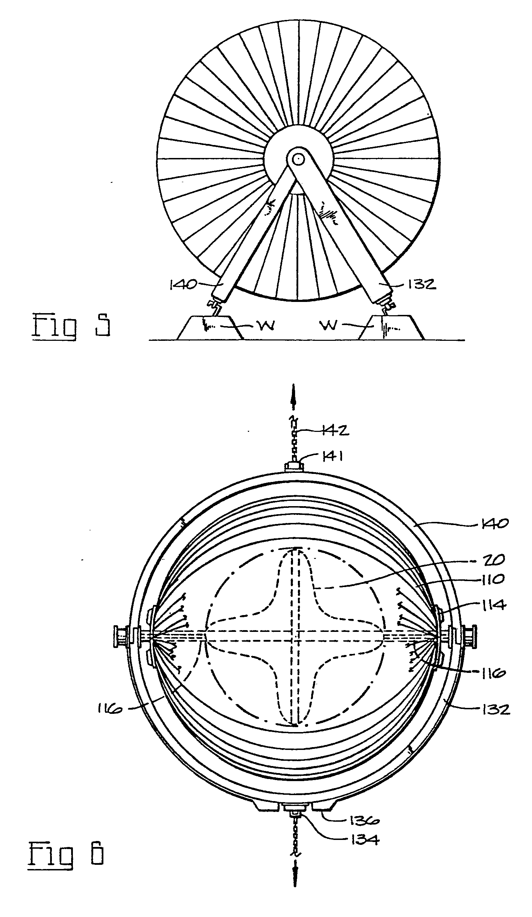

The airship shown in Figures 1 to 3 (and as claimed in aforesaid European Patent Application No. 80302686.3) has buoyancy provided by a non-rigid, spherical balloon or envelope 10 filled with helium at a pressure maintained at all times above about 1035 millibars. The balloon or envelope material will be a sandwich formed of Kevlar-29 fibre woven as a standard bias weave, with a single heavy bias being incorporated every three inches, and with on the inside an adhered layer of bilaminated Mylar and on the outside an adhered sheet of aluminized Mylar. At each side of the balloon this material is bonded firmly to the edge portions of a circular, dished steel plate 14, and this plate also provides anchorage for cables 12 which extend in circumferential direction around the balloon between the two plates. The plate 14 has a central aperture which is welded around a hollow central axle 16 (see Figure 3). The material of the balloon is fairly smooth in texture but the presence of cables 12 causes small bulges which provide a ribbed outer surface. The plate 14 is provided with a helium fill port 17 (normally closed) and a helium pressure regulating device 18 in the form of a motor driven valve which automatically vents helium to the atmosphere if the internal pressure of the balloon exceeds atmospheric pressure by 40 millibars or more.

The axle 16 supports a central ballonet 20 shown in outline in Figure 2. This is an expandable enclosure having its two end portions tapered down and sealed to the axle at 22 and having its central portion maintained in expanded condition by a circular hoop 24 held spaced from the axle 14. The central portion of the axle within the ballonet has a cavity with ports connecting to the interior of the ballonet and also being in sealed communication with non-rotating supply tubes 28 the end of one of which is shown in Figure 3. A dual blower air compressor (not shown) is provided at each end of the axle for supplying air through tube 28 to the ballonet to expand this against the pressure of the helium in balloon 10 to vary the buoyancy of the balloon. When fully expanded the ballonet is approximately circular in shape as indicated at 20' in Figure 2.

The balloon does not include any substantial internal structure, as with a rigid airship, although there may be cables connecting the axle to points on the envelope to main the proper spherical shape of the balloon. The use of numerous separate gas bags, as used in the Hutson patent, is avoided, although there may be one or more dividers extending radially of the axle for separating the internal space into separate compartments. The distribution of lifting gas throughout the balloon is substantially uniform.

End portions 16a of the axle are rotatable in bearings 30 which are provided at the top ends of arms 32 of a load supporting yoke indicated generally at 34. These arms each contain an electric motor 35 which drives a gear train terminating in gear wheel 37 attached to the end of axle 16, these motors being arranged to rotate the axle and balloon in the direction shown in Figure 1. A slipping clutch or like element may be included in the drive train to prevent undue rotational stress being applied to the balloon. As may be seen in Figure 1 from the arrow at the bottom of the figure, the direction of travel of the airship is such that the forward face of the balloon is constantly rising. The rotation will be at a controlled but variable speed of a few r.p.m. The rotation and the ribbed surface of the balloon prevent laminar air flow, and provide turbulent flow that is accelerated (low pressure) on the upper side and retarded (higher pressure) on the lower surface, thus providing lift; it is believed that this rotation will also reduce the drag of the balloon as it moves through the air. Rotational speed will be selected to give optimum values of lift and drag reduction.

The upper ends of arms 32 also carry variable pitch propeller, gas turbine engines 40 mounted on pods which can pivot about a horizontal axis coincident with that of axle 16, the engines being pivotable through 200° from a vertically upward to a vertically downward, slightly rearward direction. The variable pitch propellers also allow reversal of thrust so that the engines can serve to drive the aircraft in forward or rearward motion, lift or lower the aircraft, and in addition can tilt the aircraft about a central fore and aft axis or can rotate the aircraft about a vertical axis.

The central part of the load carrying yoke 34 is a gondola 36 which includes load engaging means in the form of cargo area 36a. Arms 32 are curved to conform to the shape of the balloon and to position the gondola 36 quite close to the bottom of the balloon, so that the distance separating the bottom of the balloon from the top of the gondola is preferably less than 1/10th of the balloon radius and in any event less than 1/3 of the balloon radius. This improves the manouverability of the craft as compared to a standard balloon construction where the gondola is supported by relatively long cables from the balloon and ensures that the balloon can be held reasonably firmly merely by mooring cables connected to the gondola. At the forward upper end of the gondola there is provided a cabin 36b for the crew members from where the craft is controlled. The cabin is pressurized to allow operation at high altitudes where drag on the aircraft is reduced. The base of the gondola has skids 38 provided for landing on solid ground, although pontoons may be used for water.

The arms 32 are elongated in the fore and aft direction and are streamlined, and are provided with rudders 41. The main body of the gondola is generally of aerofoil form having a relatively high width to height ratio (say at least 6 to 1) along most of its length; the aerofoil shape providing additional lift during forward movement. The tail section of the gondola has ailerons 42. The rudder 41 and ailerons 42 provide useful control in case of engine failure and may also be used to control swinging movements of the gondola.

The engines 40 may be mounted slightly below the position shown to provide a forwards force to the yoke and to counteract tendency for this to swing back when the aircraft accelerates.

The above described airship is designed to have a balloon of 48.3 metres diameter, giving a gross weight of 29 tonnes and a payload for freight of 20 tonnes. The speed of travel will be about 128 kilometres per hour.

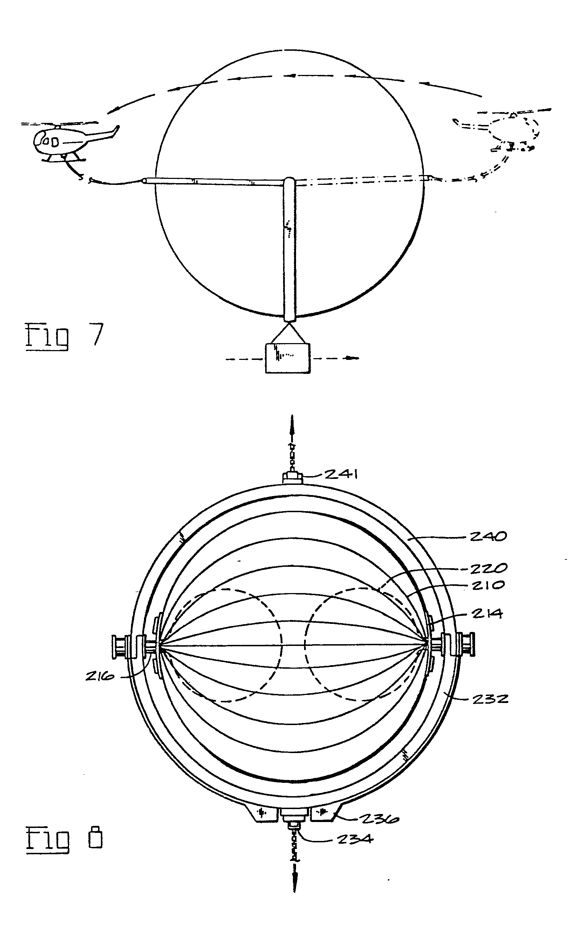

Figures 4 to 7 show a smaller version of my aircraft in accordance with the present invention and intended for use as a lifting device for use in association particularly with a helicopter.

This embodiment comprises a ribbed, superpressure balloon 110 having end plates 114 and a central horizontal axle 116, and a central ballonet 120, all of these items being generally similar to corresponding items of the airship described above except that the size of the balloon will be smaller, i.e. about 21.7 metres in diameter.

The load supporting yoke 132 of this embodiment is a simple semi-circular member having at its centre a strong load engaging hitch 134, flanked on each side by pods 136 containing an air compressor for the ballonet and a source of helium for the balloon, and having feet on which the craft may rest. The upper ends of yoke 132 are pivotally connected to projecting end portions of the axle 116. Also pivotally connected to the end portions of the axles is a towing and tethering yoke 140 which is similar to but of lighter construction than that of yoke 132, and which also has a central attachment means for cable 142 preferably in the form of winch 141. The yokes 132 and 140 are pivotable relative to each other so that they can form either a relatively small angle of less than 90° or a large angle of approaching 180°. The main load carrying yoke 132 may also carry means for rotating the balloon 110 similar to those described with reference to the airship described above.

The cable 142 has a hitch connection designed to receive the lower end of a tow bar 160 shown in Figure 4, the upper end of this tow bar being connected to a helicopter as shown. Tow bar 160 is a flexible, resilient member preferably in the form of a long curved tube which provides a semi-rigid connection between the helicopter and the towing yoke 140 but with enough resiliency to accommodate shock loadings. A radio control system may be operated from the helicopter to control the functioning of the ballonet compressor and the balloon rotating motors if used, and also to monitor the pressure of helium within the balloon; the aircraft itself being unmanned in this version.

The manner in which this aircraft will be used is evident from a study of Figures 4 to 7. Figure 5 shows the static moored condition in which the aircraft is held secured to the ground by two heavy weights W secured respectively to the two yokes 132 and 140.

A load L is attached to the hitching point 134 of the yoke 132 and this is released from the associated mooring weight. Yoke 140 is released from the second mooring weight and connected to the helicopter tow bar by cable 142 when extended from winch 141 for the purpose. The cable 142 is then drawn in by the winch, and the ballonet is partly vented to atmosphere until the aircraft has sufficient lift to raise the load; the aircraft and load are then towed.

Figure 7 shows a manoeuvre in which the helicopter moves from its original horizontal heading, pulling the aircraft around to a reverse or turning position. The aircraft turns, but the load is attached by a swivel mount and does not turn.

On landing, the yoke 140 is again released from the helicopter and used to moor the aircraft to the ground before the load L is released.

This craft may be made readily transportable by deflation of the balloon and dismantling of the arms.

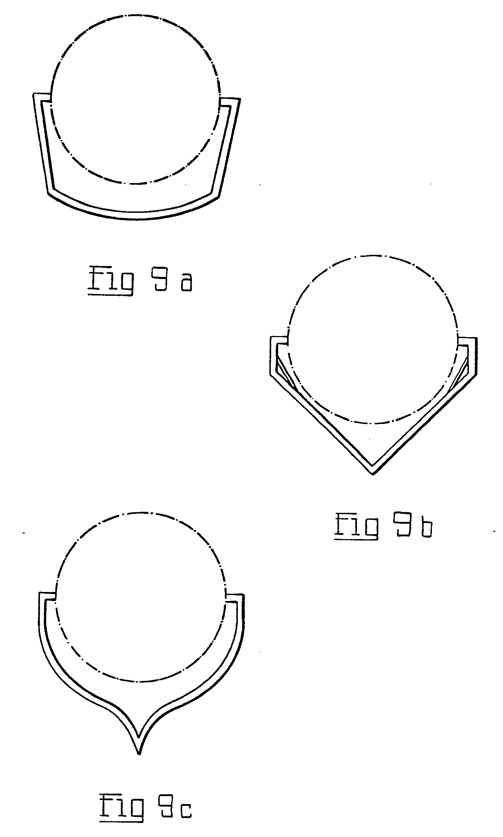

Figure 8 shows a modification of the lifting device of Figures 4 to 7 in which the axle is omitted. The device of Figure 8 includes a superpressure balloon 210 secured to end plates 214 on opposite ends of a central axis passing through the centre of the balloon. These end plates have outwardly extending spigots which are aligned with the aforesaid horizontal axis and which are maintained in this alignment by bearings provided at the outer end of the arms of the load supporting yoke 232 and at the outer end of the arms of the towing yoke 240, so that the balloon can rotate about the horizontal axis. The load supporting yoke includes a load engaging hitch 234 flanked by pods 236, and the towing yoke 240 has a central hitch member 241, all these items being similar to those of the previous embodiment. In the present case, however, instead of a central ballonet being used, two ballonets 220 are provided each connected to one of the side plates 214 and each supplied with air through the arms of yoke 232. Means are provided for ensuring that the pressure between the ballonets is normally balanced, although there may also be means for inflating one ballonet more than the other when necessary to trim the aircraft.

Figures 9a to 9c show, diagrammatically, various forms of load supporting yoke which may be used instead of the semicircular yokes of Figures 4 to 8.

**Claims**

1. An aircraft comprising a spherical balloon (110) for containing a buoyant gas and load supporting means (132) connected to said balloon in such manner as to allow the balloon to rotate about a normally horizontal axis passing through the centre of the balloon;

characterised in that said balloon (110) is a superpressure balloon having substantially fixed dimensions and shape when inflated, in that said load supporting means (132) is a rigid yoke and includes arms which extend upwardly from central load engaging means (134) and having upper ends rotatably connected to the balloon, and further comprising:

a rigid towing yoke (140) having two arms and having a central attachment means (141) for a tow bar or cable (142), and

means pivotably connecting outer ends of the towing yoke (140) arms to the upper ends of the load supporting yoke (132) in such manner that the towing yoke can be pivoted relative to the load supporting yoke about a horizontal axis passing through the centre of the balloon (110) from a towing position in which the towing yoke extends upwardly from its connection with the load supporting yoke, to a tethered position wherein the towing yoke extends downwardly from said connection with the load supporting yoke and allows said attachment means to be used to tether the balloon to the ground, said towing yoke being dimensioned relative to the balloon so as to be pivotable through at least 180° relative to the load supporting yoke.

2. An aircraft according to claim 1 characterised in that said load supporting yoke arms (132) are curved to conform with the balloon curvature and to support the load engaging means (134) in such position that the gap separating the outer surface of the balloon from the adjacent surface of said load engaging means is less than 1/3 of the balloon radius.

3. An aircraft according to Claim 1 or 2 characterised in that said balloon is mounted on a normally horizontal axle (116) passing through its centre, and further comprises an air containing ballonet (120) held at its centre by a circular hoop the centre of which is held at the mid-point of said axle, side portions of the ballonet being sealed to said axle, the arrangement being such that the ballonet (120) is held centrally within the balloon by said axle (116), said ballonet being in communication with compressor means for supplying pressurized air to said ballonet via said axle.

4. An aircraft according to Claim 1 or 2 characterised in that means connecting the upper ends of the arms to the balloon include an axle (116) which is coaxial with said horizontal axis of the balloon, and a plate (114) adjacent each end of said axle and having a central aperture within which said axle (116) is fixed, said plates being connected to fabric forming said balloon.

5. An aircraft according to Claims 1 or 2 characterised in that end plates (214) are secured to said balloon (210) on opposite ends of a central axis passing through the centre of the balloon, with means rotatably connecting the upper ends of the arms of the yoke (232) to the end plates in such manner as to allow the balloon to rotate about said central axis, and wherein two air containing ballonets (220) are each connected to a respective one of said end plates, said ballonets being in communication with compressor means for supplying pressurized air through conduits in said arms to each of said ballonets.

**Patentansprüche**

1. Luftfahrzeug mit einem kugelförmigen, mit Traggas füllbaren Ballon (110) und einer Lasttrageinrichtung (132), die mit dem Ballon derart verbunden ist, dass dieser um eine normalerweise waagerechte, durch seinen Mittelpunkt verlaufende Achse drehbar ist, dadurch gekennzeichnet, dass der Ballon (110) ein in aufgeblasenem Zustand in Abmessungen und Form unveränderlicher Überdruckballon ist, dass die Lasttrageinrichtung (132) ein starres Joch ist und Arme aufweist, die sich von einer mittigen Lasthaltevorrichtung (134) nach oben erstrecken und mit dem Ballon drehbar verbundene obere Enden aufweisen, und ferner mit einem starren Abschleppjoch (140), das zwei Arme und eine mittige Anhängevorrichtung (141) für eine Abschleppstange oder ein Abschleppkabel (142) aufweist, und

einer Vorrichtung, welche äussere Enden der Arme des Abschleppjochs (140) mit den oberen Enden des Lasttragjochs (132) derart schwenkbar verbinden, dass das Abschleppjoch in bezug auf das Lasttragjoch um eine horizontale, durch den Mittelpunkt des Ballons (110) verlaufende Achse schwenkbar ist aus einer Abschleppstellung, in welcher das Abschleppjoch sich von seiner Verbindung mit dem Lasttragjoch nach oben erstreckt, in eine vertäute Stellung, in der sich das Abschleppjoch von der gennanten Verbindung mit dem Lasttragjoch nach unten erstreckt und die Anhängevorrichtung benutzbar ist, um den Ballon am Boden zu vertäuen, wobei das Abschleppjoch im Verhältnis zum Ballon derart bemessen ist, dass es in bezug auf das Lasttragjoch um mindestens 180° schwenkbar ist.

2. Luftfahrzeug nach Anspruch 1, dadurch gekennzeichnet, dass die Arme des Lasttragjochs (132) angepasst an die Krümmung des Ballons gekrümmt sind und die Lasthaltevorrichtung (134) in einer solchen Stellung tragen, dass der Spalt zwischen der Aussenfläche des Ballons und der ihr benachbarten Oberfläche der Lasthaltevorrichtung geringer als 1/3 des Ballonradius ist.

3. Luftfahrzeug nach Anspruch 1 oder 2, dadurch gekennzeichnet, dass der Ballon auf einem normalerweisen waagerechten, durch seinen Mittelpunkt verlaufenden Achskörper (116) montiert ist und eine Luftzelle (120) enthält, die in ihrer Mitte durch einen kreisförmigen Ring gehalten ist, dessen Zentrum in der Mitte des genannten Achskörpers gehalten ist, wobei Seitenteile der Luftzelle gegen diesen Achskörper abgedichtet sind und die Anordnung so ist, dass die Luftzelle (120) durch den genannten Achskörper (116) innerhalb des Ballons mittig gehalten ist, und dass die Luftzelle mit einer Verdichtervorrichtung verbunden ist, von der aus sich Druckluft durch den genannten Achskörper der Luftzelle zuführen lässt.

4. Luftfahrzeug nach Anspruch 1 oder 2, dadurch gekennzeichnet, dass die Vorrichtung, welche die oberen Enden der Arme mit dem Ballon verbindet, einen Achskörper (116) aufweist, der gleichachsig mit der genannten waagerechten Achse des Ballons ist, und eine Platte (114) in der Nähe jedes Endes des Achskörpers, die eine mittige Öffnung aufweist, in welcher der Achskörper (116) befestigt ist, und dass diese Platten mit einem den Ballon bildenden Gewebe verbunden sind.

5. Luftfahrzeug nach Anspruch 1 oder 2, dadurch gekennzeichnet, dass an dem Ballon (210) an einander gegenüberliegenden Enden einer zentralen, durch den Mittelpunkt des Ballons verlaufenden Achse Endplatten (214) befestigt sind, und dass die oberen Enden der Arme des Jochs (232) mit den Endplatten derart drehbar verbunden sind, dass der Ballon um die genannte zentrale Achse drehbar ist, und dass zwei Luftzellen (220) mit je einer der Endplatten verbunden sind, wobei diese Luftzellen mit einer Verdichtervorrichtung zum Einleiten von Druckluft durch Leitungen in den genannten Armen in jede der Luftzellen verbunden sind.

**Revendications**

1. Aéronef comprenant un ballon sphérique (110) devant contenir un gaz de flottabilité, et des moyens de support de charge (132) connectés audit ballon de manière à permettre à ce dernier de tourner autour d'un axe normalement horizontal, passant par le centre du ballon, caractérisé en ce que ledit ballon (110) est un ballon en surpression, présentant une forme et des dimensions sensiblement fixes lorsqu'il est gonflé, en ce que lesdits moyens de support de charge (132) sont constitués par un collier rigide et comportent des bras qui s'étendent vers le haut à partir de moyens de retenue de charge centraux (134), et dont les extrémités supérieures sont reliées à rotation audit ballon et comprenant en outre un collier rigide de remorquage (140), muni de deux bras et comportant des moyens de fixation centraux (141) pour un câble ou une barre de remorque (142), et des moyens reliant à pivotement les extrémités extérieures des bras du collier de remorquage (140) aux extrémités supérieures du collier de support de charge (132), de telle manière que le collier de remorquage puisse pivoter, par rapport au collier de support de charge, autour d'un axe horizontal passant par le centre du ballon (110), à partir d'une position de remorquage dans laquelle le collier de remorquage s'étend vers le haut à partir de sa liaison avec le collier de support de charge, vers une position de fin de course dans laquelle le collier de remorquage s'étend vers le bas à partir de ladite liaison avec le collier de support de charge, et permette d'utiliser lesdits moyens de fixation pour attacher le ballon au sol, ledit collier de remorquage ayant des dimensions, par rapport au ballon, qui sont telles qu'il puisse pivoter d'au moins 180° par rapport au collier de support de charge.

2. Aéronef selon la revendication 1, caractérisé en ce que les bras dudit collier de support de charge (132) sont recourbés de manière à se conformer à la courbure du ballon et à supporter les moyens de retenue de charge (134) dans une position telle que l'intervalle qui sépare la surface extérieure du ballon de la surface adjacente desdits moyens de retenue de charge soit inférieur au tiers du rayon du ballon.

3. Aéronef selon la revendication 1 ou 2, caractérisé en ce que ledit ballon est monté sur un axe normalement horizontal (116) passant par son centre, et en ce qu'il comprend en outre un ballonnet contenant de l'air (120), maintenu en son centre par une frette circulaire dont le centre est maintenu au point médian dudit axe, des portions latérales du ballonnet étant scellées audit axe, la disposition étant telle que le ballonnet (120) est maintenu centralement à l'intérieur du ballon par ledit axe (116), ce ballonnet étant en communication avec un système de compresseur afin de délivrer de l'air sous pression audit ballonnet par l'intermédiaire dudit axe.

4. Aéronef selon la revendication 1 ou 2, caractérisé en ce que les moyens reliant les extrémités supérieures des bras au ballon comprennent un axe (116) qui est coaxial audit axe horizontal du ballon, et une plaque (114) adjacente à chaque extrémité dudit axe et comportant une ouverture centrale à l'intérieur de laquelle est fixé ledit axe (116), lesdites plaques étant reliées au tissu constituant ledit ballon.

5. Aéronef selon les revendications 1 ou 2, caractérisé en ce que des plaques d'extrémité (214) sont fixées audit ballon (210), sur des extrémités opposées d'un axe central passant par le centre du ballon, avec des moyens reliant à rotation les extrémités supérieures des bras du collier (232) aux plaques d'extrémité, de manière à permettre au ballon de tourner autour de son axe central, et dans lequel deux ballonnets contenant de l'air (220) sont reliés chacun à une plaque d'extrémité respective, lesdits ballonnets étant en communication avec un système de compresseur, afin de délivrer de l'air sous pression au travers de conduites dans lesdits bras, à chacun desdits ballonnets.

Fig 1

Fig 2

0 088 460

Fig 3

Fig 4

2

140 — 132

Fig 5

W — W

142

141

140

20

110

114

116

116

132

136

134

Fig 6

Fig 7

Fig 8

241

240

220

210

214

216

232

236

234

Fig 9 a

Fig 9 b

Fig 9 c